Europäisches Patentamt

European Patent Office

Office européen des brevets

(19)

(11) Publication number: **0 108 172**
**B1**

(12) **EUROPEAN PATENT SPECIFICATION**

(45) Date of publication of patent specification: **09.07.86**

(51) Int. Cl.⁴: **C 10 M 107/04**

(21) Application number: **82305799.7**

(22) Date of filing: **01.11.82**

(54) Dimensionally stable structural members having a low coefficient of friction, and a composition and method of making them.

(43) Date of publication of application:
**16.05.84 Bulletin 84/20**

(45) Publication of the grant of the patent:
**09.07.86 Bulletin 86/28**

(84) Designated Contracting States:
**DE GB NL**

(56) References cited:
**GB-A-2 018 820**
**US-A-3 114 708**
**US-A-3 431 203**

(73) Proprietor: **Mellor, H. Clay**
**101 Stoney Run Road**
**Wilmington Delaware (US)**

(72) Inventor: **Mellor, H. Clay**
**101 Stoney Run Road**
**Wilmington Delaware (US)**

(74) Representative: **Hale, Stephen Geoffrey et al**
**J.Y. & G.W. Johnson Furnival House 14/18 High Holborn**
**London WC1V 6DE (GB)**

Courier Press, Leamington Spa, England.

## Description

The present invention relates to dimensionally stable structural members having a low coefficient of friction, especially self-lubricating type bearings, such as journal bearings, and to novel compositions and methods for preparing same. The structurally rigid and dimensionally stable lubricant-filled articles according to the invention resist undesirable loss of lubricant during storage, even at elevated temperatures, but slowly release lubricant in use to provide desired lubrication.

Background of the invention

So-called self-lubricating bearings have been known for many years. Typically, they comprise a rigid matrix in which lubricants are impregnated, admixed or alloyed to provide the desired degree of lubricity. Such self-lubricating bearings have been formed of sintered bronze, sintered iron, hydrocarbon-impregnated wood, and various plastic materials, such as polytetrafluoroethylene, and ultra high molecular weight (UHMW) polyethylene which may contain a lubricating oil. See for example US—A—3,541,011.

Bearings fabricated entirely of UHMW polyethylene have certain limitations. For instance, the coefficient of friction of such material in contact with a rotating conventional steel shaft is about 0.25. This is about double the coefficient of friction of a lubricant-impregnated wood or an oil-impregnated sintered bronze bearing. Moreover, bearings of UHMW polyethylene tend to have about one fourth of the PV (product of load×velocity) value of lubricant-impregnated wood and about one sixth the PV value of oil-impregnated sintered bronze bearings. As is known in the bearing art, the PV value is a means of ranking bearing materials using identical test specimens and conditions. Further reference to this method appears below.

Prior to the present invention, a number of efforts have been made to fill or impregnate various plastics with fluid lubricants, such as turbine oil, but such efforts generally have been unsuccessful because the lubricant has seeped from the molded plastics at relatively high rates, even when the molded part, e.g. a bearing, was not under stress. Rapid seepage of lubricant from plastic bearings, unlike porous metal bearings, results in dimensional changes and this dimensional instability has prevented acceptance of such plastic bearings in self-lubricating bearing applications.

To demonstrate the problem of the proclivity of hydrocarbon oil-impregnated UHMW polyethylene to shrink, a bearing was fabricated from a moulded cylindrical bar comprising 80% by weight of UHMW polyethylene impregnated with 20% by weight of a turbine oil. The bar had a 26.9 mm (1.058 in) mean outside diameter and was cut to length and bored to provide a cylindrical journal bearing. The UHMW polyethylene had a nominal average molecular weight of $3.5 \times 10^6$, and is sold under the trade designation GUR by the American Hoescht Company. The turbine oil had a viscosity of 150—160 SUS at 37.8°C (100°F), and is sold by E. F. Houghton and Company under the trade designation Hydrodrive MIH Light. The aforementioned cylindrical bar was moulded from a mixture of the oil and UHMW polyethylene powder, using a pressure of 84 kg/cm$^2$ (1200 psi) and a temperature of 199°C (390°F). The bar was then machined to a nominal outside diameter of 35.06 mm (1.3805 in), was bored to a nominal inside diameter of 25.59 mm (1.0075 in), and then cut to a nominal length of 25.58 mm (1.007 in) to provide a cylindrical journal bearing. The thus produced bearing had a weight of 10.8 grams. After having been subjected to ambient room temperatures and moisture conditions for approximately 600 hours, the journal bearing was again measured and weighed. It was found that the outside diameter of the bearing had shrunk to 34.75 mm (1.368 in), the inside diameter had shrunk to 25.33 mm (0.997 in), and the length had shrunk to 25.44 mm (1.0015 in). The journal bearing weighed 10.6 grams. In view of these changes in dimensions of the journal bearing, and particularly the shrinkage of the inside diameter, it would seize the shaft, and thus would be unsatisfactory as a bearing.

With the foregoing in mind, a primary objective of the present invention is to provide a composition of matter which can be moulded into structural units, such as self-lubricating bearings, having low coefficients of friction, good dimensional stability, high wear resistance and high PV values.

A further objective of the present invention is to provide improved self-lubricating plastic bearings which provide an effective boundary film of lubricating fluid, the lubricant being released at a controlled rate even under severe operating conditions to maintain the dimensional stability of the bearings.

Summary of the invention

According to the present invention there is provided a novel composition which finds particular utility in being moulded into structural members having a low coefficient of sliding friction, dimensional stability, and exhibiting resistance to wear, such members finding particular utility in rotary sliding bearing applications, said composition comprising a substantially homogeneous blend of (a) 70 to 95% by weight, of the total weight of the composition, of either an ultra high molecular, weight ethylene polymer or an injection mouldable, high density, low to medium molecular weight ethylene polymer, and (b) 5 to 30% by weight, of the total weight of the composition, of a normally solid lubricant which is a wax, a fat, a mixture of a wax and fat or a mixture of a wax and/or a fat with a grease said grease comprising not more than 40%, by weight of the lubricant. In a preferred embodiment, the composition contains as the normally solid lubricant a blend of lubricants, namely a paraffin wax, stearin, and a white oil grease. Most preferably, the

2

polyethylene comprises about 80% by weight of the composition and the lubricant, e.g. the aforesaid lubricant blend, about 20%.

In a convenient method for preparing the compositions of the present invention using UHMW ethylene polymers, the lubricant is heated to a temperature above its melting point, e.g. to about 70°C (160°F), the finely divided UHMW ethylene polymer is heated to a temperature at least as great as the melting temperature of the lubricant but less than the melting point of the polymer (e.g. 75 to 95°C, viz. 170 to 200°F) and while the powdered resin is being stirred, the molten lubricant is admixed therewith to form a homogeneous blend. Upon cooling to room temperature, the thus-formed blend is a powder which can be stored for prolonged periods without caking, but which can be subsequently moulded to the desired shape at a temperature of 205°C±15°C (400°F±20°F) and at a pressure of 70 to 105 kg/cm$^2$ (1,000—1,500 psi). When using a low to medium molecular weight, high density, injection mouldable ethylene polymer, the finely divided polymer and lubricant may be mixed at a temperature sufficient to melt the lubricant and the resulting powder formed into pellets from which the desired part may be injection moulded.

With either method the resulting article is a rigid solid, where an UHMW ethylene polymer is used, the solid e.g. a rod, is capable of being machined into a desired configuration, such as a journal bearing. Bearings produced by either type of polyethylene have excellent dimensional stability, lubricity, and wear resistance. The moulded articles are characterised by the fact that to the touch the surface thereof appears to be substantially free from an oil-like film, yet in use the surface provides a lubricating film by slow controlled release of lubricant.

Description of preferred embodiments

In the design of self-lubricating bearings, certain considerations which are of great importance are: the coefficient of friction, the wear rate, the dimensional stability of the bearing and the bearing's ability to handle the required speeds and loads. While some bearing materials may have certain desirable properties, it is the rare bearing material which meets all of these criteria.

In recent years, ultra high molecular weight (UHMW) ethylene polymers have been used advantageously in many bearing applications. By the term "ultra high molecular weight ethylene polymers" as used in this specification is meant those polymers of ethylene having an average molecular weight above $1\times10^6$. The molecular weight may for example be as high as $5\times10^6$. These polymers have a melt index between 0.00 and less than about 0.1 as measured by ASTM D-1238-62T.

The ultra high molecular weight polyethylenes, which are largely linear, can be prepared by conventional methods, such as that using Ziegler catalysts as described in the *Encyclopedia of Chemical Technology*, 2nd Edition (1967) Vol. 14, pages 259—278.

UHMW polyethylene has a good coefficient of friction in sliding contact with shafts of 0.0004 mm finish 1045 carbon steel, excellent dimensional stability, and a good wear rate. However, there is an ever present demand for bearing materials which have even lower coefficients of friction, since a material which provides a substantial reduction in friction has the potential for saving substantial amounts of energy, and provides better wear rates.

The present invention provides novel compositions which are particularly suited for fabricating self-lubricating bearings. As used hereinafter, the term "bearing" is intended to include not only rotary or journal-type bearings, but also linear bearings. Of course, the compositions of the present invention may be useful in providing moulded members for use in any application where there is a need for low friction between engaging parts moving relative to one another.

In bearing design, a factor designated "PV" has been developed as a measure of the capacity of a bearing to carry loads at different speeds, where "P" represents the bearing load, and "V" represents the relative speed between a shaft and a journal bearing. P is expressed in newtons per square millimeter of the projected area of the bearing, and mathematically, P equals the total load in newtons divided by the product of the length and diameter of the bearing. V is expressed in meters per second at the interface between the shaft and bearing. Mathematically, V equals the product of pi multiplied by the diameter of the shaft in millimeters and its rotational speed in rpms, divided by 1000.

As a general rule, sliding-type bearing materials have a capacity to accept either a high speed at a low load or a high load at a low speed. In other words, the product of P×V tends to be a constant for a given bearing material. The PV factor is, therefore, a reliable standard with which to compare various bearing materials.

Bearings of UHMW polyethylene can be used in small bearing applications where maximum PV levels are between 0.07 and 0.105 N/mm$^2$×m/sec. (2000—3000 psi-fpm). Under these conditions, the coefficient of friction can be as high as 0.30, and the wear rate may reach $18.5\times10^{-6}$ cm/hr at 0.09 N/mm$^2$×m/sec. ($29\times10^{-10}$ in$^3$-minutes/lb-ft-hour). As will be discussed, bearings made from compositions according to this invention will have coefficients of friction less than about 0.1, PV levels in excess of 0.35 N/mm$^2$×m/sec (10,000 psi-fpm), dimensional stability such that a bearing having an ID of 25.4 mm (1 in), on standing at ambient temperature, does not evidence a change in the dimension of the ID exceeding about −0.10 mm (0.004 in). Bearings according to the invention also have remarkably low wear rates. Bearings having the most preferred compositions of the present invention function satisfactorily at PV values of 1.75 N/mm$^2$×m/sec (50,000 psi-fpm) at coefficients of friction as low as about 0.02, with wear rates as little as $100\times10^{-6}$ cm/hr at 1.75 N/mm$^2$×m/sec ($7.9\times10^{-10}$ in$^3$-minutes/lb-ft-hour).

3

The present invention in one aspect provides compositions comprising an UHMW ethylene polymer and a normally solid lubricant which is at least extremely viscous at room temperature but which becomes fluid at moderately elevated temperatures within a range lower than the temperature at which the polymer softens. After the compositions are moulded or extruded into a rod or tubular shape by the application of heat and pressure, a rigid, form-maintaining structure is produced having a surface which, to the touch, is substantially free from an oil-like film. The resulting structure is dimensionally stable, not only under ambient conditions of temperature and humidity, but also at elevated temperatures. However, in use the bearings release lubricant at a slow, controlled rate to provide low coefficients of friction, high PV values and low wear rates. Thus, the bearings find particular utility in self-lubricating applications.

The matrix of the novel compositions and structural members moulded therefrom may be a UHMW ethylene polymer. As noted above, such polymers have an average molecular weight of from over $1 \times 10^6$ generally up to about $5 \times 10^6$. Preferred polymers have a molecular weight in the range of from $1.5 \times 10^6$ to $3.5 \times 10^6$. These polymers are generally available in the form of finely divided solids.

Alternatively, the polyethylene used may be of low to medium molecular weight and high density, and injection mouldable. By low to medium molecular weight is meant from 60,000 to 750,000 or somewhat higher. These polymers are usually available initially in powder form, but after being combined with lubricant the resulting composition may be formed into pellets for use in injection moulding apparatus.

The ethylene polymer constitutes between 70% and 95% of the weight of the composition. Preferably, the composition comprises about 80% of polyethylene. The percentages are by weight, based on the weight of the total composition before processing as described hereinafter. As will become apparent, this preferred amount of polymer, when combined with the preferred lubricant, provides an outstanding bearing material.

The balance of the weight composition, i.e. 5% to 30% by weight, comprises a normally solid lubricant. By the term "normally solid" is meant that the lubricant is substantially form-maintaining at room temperature, whether or not the lubricant comprises a single material, such as a wax, or is a combination of materials, e.g. a mixture of a wax, a fat, and a grease. By "form-maintaining" is meant that the lubricant at room temperature may vary in consistency from an extremely viscous substance to a rigid solid. Upon heating the lubricant to elevated temperatures, usually above about 35°C (100°F), but below the softening point of the ethylene polymer, which is frequently about 115°C (240°F), the lubricant becomes sufficiently fluid to be intimately mixed with the polymer particles to form a uniform blend, yet upon cooling to ambient temperatures the polymer and lubricant, or components of the lubricant, do not become segregated. For example, if the lubricant comprises in part a grease, it is important that upon heating and cooling of the lubricant, the oil in the grease does not separate. Preferably, the lubricants become liquid upon being heated to temperatures on the order of 60 to 70°C (140 to 160°F).

The lubricants which may be employed in the compositions and articles of the present invention comprise waxes and fats and mixtures thereof, which materials, either alone or as a mixture of the two, may be combined with certain greases, usually present only in minor proportions.

The term "wax" as used herein refers to any plastic, amorphous mass of animal, vegetable, mineral or synthetic origin which becomes fluid at temperatures above about 35 to 40°C. The waxes are plastic solids that have cold-flow yield values within the force range practical for manual working at room temperature, and have hydrophobic or water-repellent properties. The wax may be a single wax or a mixture of waxes. The natural waxes, i.e. the animal (including insect) and vegetable waxes are long-chain fatty alcohols and acids whereas those of mineral or petroleum origin consist essentially of hydrocarbons.

Typical of the natural waxes of animal or vegetable origin which may be used in this invention are · beeswax, bayberry-myrtle, candelilla, caranday, carnuba, castor bean wax, esparto grass wax, Japan wax, mountain crude wax, ouricury, tetamo-ceri nimbi, shellac wax, spermacetti, wool wax-lanolin and the like. A preferred natural wax is carnuba wax.

Mineral waxes are preferably those of petroleum origin such as paraffin wax, microcrystalline wax, motor oil wax, residual wax and tank bottom wax. The preferred wax is a paraffin wax having a melting point on the order of 50 to 60°C (120°—140°F). Typically commercially available petroleum waxes are Mobil Wax Nos. 130 and 140 sold by Mobil Oil Company, and Boler No. 1461 sold by the Boler Petroleum Company. The properties of these commercial waxes are set forth in Table I, below:

4

TABLE I

| Typical characteristics | Mobil 130 | Mobil 140 | Boler |
|---|---|---|---|
| Colour | +28 Saybolt | +30 Saybolt | Light brown |
| Viscosity at 99°C (210°F), SUS | 39 | 41 | 37/39 |
| Melting point °C ASTM | 55 | 60.5 | 53.5/55.5 |
| Blocking point °C | 38 | 43.5 | |
| Flash point °C COC | 220 | 230 | |
| Oil content % by wt. | 0.3 | 0.3 | 1.0 |

The fats suitable for use as lubricants in the present invention may be those derived from animal origin, an example of which is stearin obtained by rendering choice internal fats of cattle or sheep followed by separation of the oleo oil (see *Encyclopedia of Chemical Technology,* 2d (1967), Vol. 13, page 182). A commercially available stearin is sold by Armour Foods Company under the trade name Armour Code S-0002, and another is sold by Acme-Hardesty Company, Inc., under the trade name technical Oleo Stearin TOS. These commercial products comprise 100% food grade tallow having 54 to 60°C (130°—140°F) melting point. Individual fats or mixtures of fats may be used.

Any of the common greases, such as Grades 2, 3 and 4, or mixtures of greases may be used in this invention. Generally, lower grade greases are not as effective since the oil therein may tend to bleed therefrom and consequently from bearings made in accordance with the teachings of this invention, even under ambient conditions. Such bleeding results in dimensional changes of the bearings of such magnitude as to cause the bearings to seize the axle rotating therein. However, by using greases of Grade 2 and higher, such bleeding can be avoided.

The grease can comprise any natural or synthetic lubricating oil thickened by such well known thickeners as salts, soaps, soap-salt or mixed salt complexes, polymeric thickeners such as polymers of $C_2$ to $C_4$ mono-olefins of 10,000 to 50,000 molecular weight (e.g. polyethylene or polypropylene), and inorganic thickeners (e.g. clay, carbon black, silica gel, etc.).

Generally the greases will comprise either a synthetic or mineral lubricating oil thickened with 3 to 35% by weight of a thickener. Preferably the oil is a low viscosity oil having a viscosity on the order of 300 to 800 SUS at 38°C (100°F), for greases containing such an oil provide the bearings of this invention with the lowest coefficients of friction. A particularly preferred grease is a white oil grease, commercial examples of which are one sold by the Keystone division of Pennwalt Corporation under the trade designation Nevastane Medium Grease and another sold by Plough Company under the trade name Nujal. These greases are thickened with aluminium soaps and have a dropping point of about 107°C (225°F).

As stated previously, the normally solid lubricant comprises from 5% to 30% by weight of the compositions (and bearings etc.) of this invention. Particularly preferred compositions comprise about 80% polymer and about 20% lubricant, by weight, the lubricant comprising a mixture of a wax, a fat, and a grease. In such lubricant mixtures the wax may comprise from 30% to 60%, and each of the fat and the grease from 10% to 40%, said percentages being by weight based on the total weight of the mixture of lubricants. A particularly preferred lubricant comprises 46% paraffin wax, 27% stearin and 27% white oil grease, by weight.

In producing the compositions of the present invention, the ethylene polymer may be heated in finely divided form to a temperature which is higher than the melting temperature of the lubricant or blend of lubricants, but below the temperature at which the polymer begins to soften. For example, the ethylene polymer may be heated to a temperature in a range of 75 to 95°C (170 to 200°F) in a vessel surrounded by water or air. This can be accomplished for example by stirring the polymer in a high intensity mixer such as that manufactured by Henshel. The intensity of the motion within the vessel raises the temperature of polymer powder to the desired level, a water jacket around the vessel being used for cooling to maintain proper temperature control. The lubricant or blend of lubricants is heated to a temperature above its melting point, generally to about 70°C (160°F), to form a liquid, and the liquid lubricant is slowly admixed with the powdered polymer with constant stirring. After the lubricant and resin have been thoroughly mixed, which generally takes about 5 minutes, the composition is allowed to cool to room temperature. More rapid cooling can be achieved by depositing the composition in a cooler while maintaining a gentle stirring action. The resulting composition is a homogeneous powder which does not have a tendency to cake, and can be stored or shipped in bags or containers and yet remains in a state suitable for subsequent processing, including moulding or extrusion. Where the polyethylene is of the high density injection mouldable type the powder can be formed into pellets of the type normally used in injection moulding.

Whilst a batch process for preparing compositions of this invention has been described above, it should be apparent that the process of the present invention can be carried out on a continuous basis, if desired. Moreover, whilst the compositions have been stated to be permitted to cool to ambient temperatures, it should be apparent that such step may not be necessary if the composition is to be utilised immediately as by being moulded into structural shapes in the same plant where the compositions are mixed.

It has been found that by heating a composition containing UHMW polyethylene to a temperature of 205°C±15°C (400°F±20°F) and applying pressures in a range of 70 to 105 kg/cm$^2$ (1,000 to 1,500 psi) a very satisfactory solid product is obtained upon cooling to ambient temperatures. The resulting solid may then be milled or machined into whatever structural shape may be desired for any particular application.

The following specific examples are intended to illustrate the advantages of the compositions and bearings of this invention, but it is not intended that the invention be limited to the specific embodiments described therein.

In the several specific examples, unless otherwise indicated, journal bearings were prepared by heating the lubricant or lubricant blend to a temperature sufficiently high to render the lubricant fluid. The UHMW ethylene polymer used had an average molecular weight of about 3.5×10$^6$, and the polymer was also heated to a temperature of 75 to 95°C (170 to 200°F). The powdered mixture obtained on cooling was placed in a cylindrical mold in which the mixture was formed into a rod by being compressed at a temperature of 400°F (205°C) under a pressure of about 84 kg/cm$^2$ (1200 psi). The rod was subsequently cut to length and bored to produce journal bearings which were tested as described hereinbelow.

Example I

This example demonstrates the unexpected properties of a journal bearing formed of a preferred composition of the present invention, as contrasted with conventional self-lubricating bearings. The bearing tested had a composition which comprised 80% by weight UHMW polyethylene and 20% by weight of a blend of lubricants, the blend consisting of 45.6% of a paraffin wax, 25.7% stearin and 25.7% white oil grease, by weight. The bearing, which was fabricated as described above, had a length of 25.34 mm (0.9975 in) and an inside diameter of 25.68 mm (1.0110 in). After standing for three weeks under ambient conditions of temperature and humidity, the change in the dimension of the ID was only +0.038 mm (+0.0015 in).

A carbon steel shaft having a 0.0004 mm finish was used in the test, and the shaft was rotated at 382 rpm, thereby providing a surface speed of 0.5 m/sec (100 fpm). The three different bearings were tested on the Arguto "Simulife" bearing testing machine, made by Arguto, Inc. Basically the test machine consists of two 25.4 mm (1 in) diameter shafts which are driven by an electric motor through a variable speed drive to give shaft speeds from 0.25 to 5 m/sec (50 to 1000 ft/min). The bearings to be tested are pressed into retaining rings which are inserted in the bearing support arms. Each bearing support arm is part of a parallelogram mounted on hardened knife edges. The bearing is loaded by means of a levered weight arm so that loads may be varied from zero to 450 kg (1000 pounds).

Friction force is measured by strain gauges mounted on a torque arm and is recorded directly on one channel of a dual channel oscillograph. The bearing temperature is measured by means of a thermocouple buried in the loaded side of the bearing wall and recorded in the second channel of the oscillograph. The shaft speed is indicated directly on a tachometer. The test results are set forth below in Table II, in which the bearing of this invention is designated "DGB".

TABLE II

| Bearing | PV (N/mm$^2$×m/sec) | Coefficient of friction | Wear rate (in$^3$-min/lb-ft-hr) |
|---|---|---|---|
| DGB | 1.75 | 0.02 | 7.9×10$^{-10}$ 100.33×10$^{-6}$ (cm/hr) |
| DGB | 0.35 | 0.05 | 1.8×10$^{-10}$ 4.57×10$^{-6}$ (cm/hr) |
| Lubricant-impregnated wood | 0.35 | 0.11 | 4.5×10$^{-10}$ 11.43×10$^{-6}$ (cm/hr) |
| Virgin UHMW polyethylene | 0.09 | 0.32 | 29×10$^{-10}$ 18.42×10$^{-6}$ (cm/hr) |

From Table II, it may be seen that the DGB bearing at high PV had a coefficient of friction which was less than 1/5th the coefficient of friction of a typical lubricant-impregnated wood bearing, and about 1/15th the coefficient of friction of the virgin UHMW polyethylene bearing. The wear rate per PV unit for the DGB bearing at high PV was less than double the wear rate for the lubricant-impregnated wood despite a four-fold increase in PV value, and still was less than 1/3 the wear rate of the virgin UHMW polyethylene bearing, even at 20 times the PV. Both DGB bearings showed greater than a 70× better performance than

that of the bearing formed entirely of the polymer, which polymer was the same as that used in the DGB bearings.

Example II

This example further demonstrates the superior performance obtainable by bearings made in accordance with the present invention. One bearing had a composition comprising 85% UHMW polyethylene and 15% of the lubricant blend of Example I, another had a composition comprising 95% UHMW polyethylene and 5% of the same lubricant blend, a third had a composition comprising 80% UHMW polyethylene and 20% of the aforesaid lubricant blend, and a fourth had a composition comprising 70% UHMW polyethylene and 30% of the lubricant blend, all percentages being by weight. The four bearings, which had similar dimensions to the bearing of Example I, were tested under conditions identical to those of Example I. The results are set forth below in Table III.

TABLE III

| Bearing composition* | PV $N/mm^2 \times m/sec$ | Coefficient of friction | Wear rate $(in^3\text{-min/lb-ft-hr})$ |
|---|---|---|---|
| 95/5 | 0.35 | 0.11 | $.4 \times 10^{-10}$ $1.02 \times 10^{-6}$ (cm/hr) |
| 85/15 | 0.35 | 0.06 | $1.4 \times 10^{-10}$ $3.56 \times 10^{-6}$ (cm/hr) |
| 80/20 | 1.75 | 0.02 | $7.9 \times 10^{-10}$ $100.33 \times 10^{-6}$ (cm/hr) |
| 80/20 | 0.35 | 0.05 | $1.8 \times 10^{-10}$ $4.57 \times 10^{-6}$ (cm/hr) |
| 70/30 | 0.35 | 0.07 | $15.0 \times 10^{-10}$ $38.10 \times 10^{-6}$ (cm/hr) |

* The first number is the wt.% of polymer and the second is wt.% of lubricant.

From Table III, it may be seen that all four bearings exhibited extremely low coefficients of friction and low wear rates.

Example III

In order to demonstrate further the effect of changes in the proportions of lubricant and UHMW polyethylene in bearings made in accordance with the teachings of this invention, additional bearings were made as described in Example I, above. In the present Example, however, the journal bearings had a length of 12.7 mm (1/2 in) and an internal diameter of 12.7 mm (1/2 in). The lubricant blend of Example I was employed in the bearings, the weight percent of UHMW ethylene and lubricant in the bearings being, respectively,.70/30, 80/20 and 85/15. The shaft used in the test was 1045 carbon steel having a 0.0004 mm finish. The shaft speed was set at either 760 or 1750 rpms. The results of the test are set forth below in Table IV.

TABLE IV

| Bearing composition | PV $(N/mm^2 \times$ m/sec) | (m/sec) | Total hours (m/sec) | Coefficient of friction | Wear rate $(in^3\text{-min/lb-ft-hr})$ (cm/hr) |
|---|---|---|---|---|---|
| 80/20 | 0.35 | (1.17) | 598 $17.0 \times 10^{-6}$ | 0.14 | $6.7 \times 10^{-10}$ |
| 70/30 | 0.35 | (1.17) | 383 | 0.05 | $8.9 \times 10^{-10}$ $22.6 \times 10^{-6}$ |
| 85/15 | 0.35 | (0.51) | 390 | 0.11 | $6.8 \times 10^{-10}$ $17.3 \times 10^{-6}$ |
| 70/30 | 0.35 | (0.51) | 402 | 0.07 | $10 \times 10^{-10}$ $25.4 \times 10^{-6}$ |

**0 108 172**

As seen by reference to Table IV, even at PV values of 0.35 N/mm²×m/sec) the bearings evidenced low coefficients of friction and low wear rates.

Example IV

Further tests were conducted on bearings of this invention, prepared in the same manner as and having the same dimensions as the bearings of Example I. The composition of one of the bearings was 85% polymer and 15% of the lubricant blend of Example I, whereas that of the other 70% polymer and 30% lubricant blend, by weight in each case. The purpose of the tests was to determine the change of coefficient of friction and total wear at different PV values. The bearing, shaft and test conditions were as set forth in Example I. The bearings were run-in at 0.35 N/mm²×m/sec for a period of 140—150 hours. Loading was thereafter increased at 45 minute intervals from 0.69 N/mm² (100 psi) to 1.38, 2.07, 2.41, 2.76 and 3.27 N/mm² (200, 300, 350, 400 and 475 psi), the last of these tests being run at 0.53 m/sec (105 feet per minute) for a PV value of 1.75 N/mm²×m/sec. After that level had been reached, the test was continued for an additional 50 hours. The results of the test are set forth in Table V.

TABLE V

| Bearing composition | Coefficient of friction at stated PV (N/mm²×m/sec) | | | | | | Total wear cm |
|---|---|---|---|---|---|---|---|
| | 0.35 | 0.70 | 1.05 | 1.22 | 1.40 | 1.75 | |
| 85/15 | 0.05 | 0.03 | 0.03 | 0.02 | 0.02 | 0.05 | 0.013 |
| 70/30 | 0.04 | 0.03 | 0.03 | 0.02 | 0.02 | 0.02 | 0.019 |

As with most self-lubricating bearings, increasing load at constant speed produced a lowering of the coefficient of friction. Throughout this test programme, direct comparison with other plastic bearings was not possible because such bearings are incapable of supporting PV levels in this range.

Example V

The purpose of this example is to show the performance of bearings of this invention using different lubricants. The bearings were prepared and tested according to the procedures of Example I, each bearing consisting, by weight, of 80% of UHMW polyethylene and 20% of the particular lubricant blend. The bearings had the composition set forth in Table VI, below:

TABLE VI

| Bearing | Paraffin wax | Stearin | Weight percent* White oil grease |
|---|---|---|---|
| A | 45 | — | 55 |
| B | 45 | 55 | — |
| C | — | 50 | 50 |
| D | 46.6 | 26.7 | 26.7 |

* Based on total weight of lubricants.

The bearings gave the following coefficients of friction when tested at a PV of 0.35 N/mm²×m/sec:

TABLE VII

| Bearing | Coefficient of friction |
|---|---|
| A | 0.04 |
| B | 0.05 |
| C | 0.03 |
| D | 0.02 |

The data in Table VII show that bearings of this invention having different lubricants evidence extremely low coefficients of friction even at a PV value of 0.35 N/mm²×m/sec.

Example VI

Comparable specimens, one of pure UHMW polyethylene, a second of a sulfone polymer, a third of

8

nylon, a fourth of a polyurethane resin, a fifth of phenolic resin, and a sixth having the composition of the bearing in Example I, were subjected to the sandbelt test, in which a belt of sandpaper is advanced horizontally along the underside of an annular sample which is fastened to the underside of a gear, which is rotated about a vertical axis. Changes in the thickness of the sample are measured at the end of the test period, and the results are set forth in Table VIII, below:

TABLE VIII

| Test sample | Wear rate $(cm^3/min \times 10^{-3})$ |
|---|---|
| UHMW polyethylene | 82 |
| Example I composition | 131 |
| Sulfone polymer | 197 |
| Nylon | 229 |
| Polyurethane resin | 295 |
| Phenolic resin | 410 |

As can be seen by reference to the data set forth in Table VIII, with the exception of the UHMW polyethylene, the wear rate for the material of this invention (Example I composition) is less than that for the other samples tested. As to the UHMW polyethylene, the difference in wear rates is relatively insignificant considering the substantial improvement in performance for compositions of this invention, as noted in the previous Examples.

Example VII

Specimens of pure UHMW polyethylene, of the composition of the present invention, and of nylon, acetyl resin, and steel were subjected to the sand slurry test. In this test, a 76.2×25.4 mm (3 in by 1 in) flat rectangular specimen having a central hole is mounted adjacent the end of a vertically disposed rod which is connected at its upper end to an electric motor. The test specimen is immersed in a 50% sand-50% water slurry. The motor rotates the specimen in the slurry at a speed of 1750 rpm. The test was conducted over a period of $7\frac{1}{2}$ hours, and the test results are given in Table IX, below:

TABLE IX

| Test sample | Wear rate $(cm^3/min \times 10^{-3})$ |
|---|---|
| UHMW polyethylene | 115 |
| Example I composition | 393 |
| Nylon | 492 |
| Acetyl resin | 1590 |
| Carbon steel | 1639 |

In use, it has been found that the initial coefficient of friction of bearings having the composition of the present invention, in contact with a 1045 carbon steel shaft having an 0.0004 mm finish is about 0.20 to 0.30, typical of the coefficient of friction for self-lubricating plastic materials. It is believed, however, that after a brief run-in period, in the bearings of this invention a lubricant film forms at the interface between the bearing and the shaft, causing the coefficient of friction to decrease rapidly and reach a steady state below about 0.1, depending upon operating conditions. Heretofore, such low values of coefficient of friction have generally been obtained only in bearings having external lubrication.

Example VIII

A number of journal bearings which had the nominal dimensions of 25.4 mm (1 in) ID×34.9 mm (1 3/8 in) OD×25.4 mm (1 in) long, were prepared as described in the several previous Examples. The compositions of the several bearings are given in Table X, below:

TABLE X

| Sample description | Composition* |
|---|---|
| 1 | Wax 33.3%, stearin 33.3%, white oil grease 33.3% |
| 2 | Wax 100% |
| 3 | Stearin 100% |
| 4 | Wax** 46.6%, stearin 26.8%, white oil grease 26.8% |

\* All samples consisted of 80% UHMW polyethylene and 20% lubricant. All percentages are by weight.
\*\* Polyethylene wax.

The test bearings were measured after being machined and again after being subjected to ambient room conditions of temperature and humidity for more than 300 hours, and changes of dimensions were noted. The changes are recorded in Table XI, below:

TABLE XI

| Sample designation | Dimensional change (mm) | | |
|---|---|---|---|
| | OD | ID | Length |
| 1 | −0.025 | +0.025 | −0.025 |
| 2 | −0.178 | −0.102/+0.025 | +0.279 |
| 3 | −0.051 | −0.051/+0.114 | +0.051 |
| 4 | −0.025 | +0.025 | +0.013 |

The bearings were also tested on the Arguto "Simulife" test machine as described in Example I, using a load of 0.69 $N/mm^2$ (100 psi), and a surface speed of 0.508 m/sec (100 fpm), i.e. PV 0.35 ($N/mm^2 \times$m/sec). The results of the tests are given in Table XII, below:

TABLE XII

| Sample designation | Bedding in wear (mm) | Wear rate after bedding in | | Coefficient of friction |
|---|---|---|---|---|
| | | (cm/min) | ($in^3$-min/lb-ft-hr) | |
| 1 | 0.043 | $15.2\times10^{-6}$ | $6\times10^{-10}$ | 0.03 |
| 2 | 0.127 | $20.3\times10^{-6}$ | $8\times10^{-10}$ | 0.08 |
| 3 | 0.053 | $21.8\times10^{-6}$ | $8.6\times10^{-10}$ | 0.06 |
| 4 | 0.051 | $29.2\times10^{-6}$ | $11.5\times10^{-10}$ | 0.06 |

Bearings having the preferred composition of the present invention, i.e. 80% polymer and 20% lubricant, the lubricant consisting of about 46% paraffin wax, 27% stearin and 27% white oil grease, all percentages being by weight, have an extremely low wear rate when compared with the bearings of other types of polymers. For instance, in the tests on bearings of the preferred composition 0.35 $N/mm^2 \times$m/sec (0.51 m/sec) a wear rate of $5.1\times10^{-5}$ mm/hr has been measured. Similar tests at 0.70 $N/mm^2 \times$m/sec (2.03 m/sec) and at 1.75 $N/mm^2 \times$m/sec (2.54 m/sec) have yielded wear rates of $2.5\times10^{-5}$ cm/hr. All of these values are very small, and generally equivalent to the wear rate of self-lubricating polytetrafluoroethylene (PTFE) bearings at 1/10th these PV values. Moreover, the coefficients of friction measured in these tests were 0.04/0.05, which is about 1/5th of the values generally obtained in comparable tests of PTFE bearings.

While some lubricant can be expected to be lost in the process of moulding the composition of the present invention, it has been determined that such loss is generally less than about 1% of the weight of the total premoulded composition.

In view of the foregoing, it should be apparent that the present invention provides compositions from which structural members, such as bearings, can be fabricated, which members have characteristics rendering them particularly suited for use in applications where a low coefficient of friction, self-lubrication, wear resistance, dimensional stability, and structural strength are desirable qualities. Potential applications include: domestic appliances, office machines, textile machinery, farm equipment, conveyors, food machinery, printing presses and graphic arts equipment, pumps, fractional horsepower electric motors, and hardware. Certain linear bearing applications, i.e. applications wherein articles such as cans are conveyed on an elongated trackway, are particularly suitable for the compositions of the present invention.

Bearings made with high density, injection mouldable ethylene polymers have somewhat less resistance to abrasive wear, lower impact strength, and slightly lower PV values than similar bearings based on UHMW ethylene polymers, but nevertheless are still superior to other comparative materials of the types tested in the foregoing Examples.

## Claims

1. A composition suitable for being moulded into a load-bearing structural member which is dimensionally stable when subjected to compressive force, has a low coefficient of friction, and the surface of which, to the touch, is substantially free of an oil-like film, comprising a blend of an ethylene polymer and a lubricant, characterised in that the composition is a substantially homogeneous blend of from 70% to 95%, by weight, of an ultra high molecular weight ethylene polymer or a high density, low to medium molecular weight, injection mouldable ethylene polymer, and from 5% to 30%, by weight, of a normally solid lubricant selected from waxes, fats, mixtures of waxes and fats and mixtures of waxes and/or fats with greases, said greases comprising not more than 40%, by weight, of the lubricant.

2. A composition according to claim 1, characterised in that an ultra high molecular weight ethylene polymer is used which has an average molecular weight of from $1.5 \times 10^6$ to $3.5 \times 10^6$.

3. A composition according to claim 1, characterised in that a low to medium molecular weight ethylene polymer is used which has an average molecular weight of from 60,000 to 750,000.

4. A composition according to any of claims 1 to 3, characterised in that the lubricant comprises a paraffin wax.

5. A composition according to any of claims 1 to 4, characterised in that the lubricant comprises stearin.

6. A composition according to any of claims 1 to 5, characterised in that a lubricant is used which comprises a mixture of a wax, a fat and a grease.

7. A composition according to claim 6, characterised in that the lubricant comprises from 30 to 60% wax, from 10 to 40% fat and from 10 to 40% grease, said percentages being based on the total weight of said lubricant components.

8. A composition according to claim 1, characterised in that it comprises about 80% by weight of ethylene polymer and about 20% by weight of normally solid lubricant, said lubricant comprising by weight about 46% paraffin wax, about 27% stearin and about 27% white oil grease.

9. A structural member having dimensional stability and a low coefficient of friction in the form of a tough, rigid, solid body, characterised in that it is composed of a composition according to any of claims 1 to 8.

10. A structural member according to claim 9, characterised in that it is in the form of a journal-type bearing.

11. A method of making a composition suitable for being moulded into a load-bearing structural member which is dimensionally stable when subjected to compressive force, has a low coefficient of friction, and the surface of which, to the touch is substantially free of an oil-like film, characterised in that it comprises the steps of:

(a) heating a normally solid lubricant selected from waxes, fats, mixtures of waxes and fats and mixtures of waxes and/or fats with greases, the lubricant comprising not more than 40% by weight of greases, to form a liquid.

(b) heating either a finely-divided, ultra high molecular weight ethylene polymer or a finely divided high density, low to medium molecular weight, injection mouldable ethylene polymer to a temperature above the temperature of the liquefied lubricant but below the temperature at which the polymer softens,

(c) mixing the liquefied lubricant and polymer together to form a homogeneous blend comprising from 5% to 30% by weight of lubricant and from 70% to 95% by weight of polymer, and

(d) cooling said homogeneous blend to obtain a homogeneous powder.

12. A method according to claim 11, characterised in that the normally solid lubricant is heated to a temperature of about 70°C (160°F), and the polymer is heated to a temperature of 75 to 95°C (170 to 200°F) prior to blending the lubricant and polymer.

13. A method according to claim 11 or 12, characterised in that the lubricant and polymer are used in proportions to provide a blend comprising about 20% by weight of lubricant and about 80% by weight of polymer.

14. A method according to claim 13, characterised in that the lubricant comprises a mixture of paraffin wax, stearin and a white oil grease, said wax constituting about 46% by weight of said lubricant mixture, the remainder of the mixture comprising about equal parts by weight of stearin and white oil grease.

15. A method of making a tough, rigid, dimensionally stable article having a low coefficient of friction and a surface substantially free from an oil-like film, characterised in that a blend is formed by a method according to any of claims 11 to 14 using an ultra high molecular weight polymer but optionally omitting step (d), and in that the blend is heated to a temperature of from 190 to 220°C (380 to 420°F) and subjected to a pressure of 70 to 105 kg/cm$^2$ (1000 to 1500 psi) for a time sufficient to produce the required dimensionally stable article upon cooling.

16. A method of making a dimensionally stable article having a low coefficient of friction and a surface substantially free from an oil-like film, characterised in that a blend is formed by a method according to any of claims 11 to 14 using an injection mouldable ethylene polymer but optionally omitting step (d), the blend is formed into pellets and the pellets are subsequently injection moulded to form the required dimensionally stable article.

**Patentansprüche**

1. Zusammensetzung, die zu einem lasttragenden Strukturelement formbar ist, das unter der Einwirkung von Druckkräften dimensionsstabil ist, einen niedrigen Reibungskoeffizienten besitzt und dessen Oberfläche sich als weitgehend frei von ölartigem Film anfühlt, bestehend aus einem Gemisch eines Aethylenpolymeren und eines Schmierstoffs, dadurch gekennzeichnet, dass die Zusammensetzung ein weitgehende homogenes Gemisch aus 70 bis 95 Gew.-% eines Aethylenpolymeren extrem hohen Molekulargewichts oder eines spritzgiessbaren Aethylenpolymeren hoher Dichte und niedrigen bis mittleren Molekulargewichts und 5 bis 30 Gew.-% eines normalerweise festen, unter Wachsen, Fetten, Gemischen aus Waschen und Fetten sowie Gemischen aus Wachsen und/oder Fetten mit Schmierfetten ausgewählten Schmierstoffs darstellt, wobei diese Schmierfette nicht mehr als 40 Gew.-% des Schmierstoffs ausmachen.

2. Zusammensetzung nach Anspruch 1, dadurch gekennzeichnet, dass das verwendete Aethylenpolymer extrem hohen Molekulargewichts ein Durchschnittsmolekulargewicht von 1,5 . 10$^6$ bis 3,5 . 10$^6$ aufweist.

3. Zusammensetzung nach Anspruch 1, dadurch gekennzeichnet, dass das verwendete Aethylenpolymer niedrigen bis mittleren Molekulargewichts ein Durchschnittsmolekulargewicht von 60 000 bis 750 000 aufweist.

4. Zusammensetzung nach einem der Ansprüche 1 bis 3, dadurch gekennzeichnet, dass der Schmierstoff aus einem Paraffinwachs besteht.

5. Zusammensetzung nach einem der Ansprüche 1 bis 4, dadurch gekennzeichnet, dass der Schmierstoff aus Stearin besteht.

6. Zusammensetzung nach einem der Ansprüche 1 bis 5, dadurch gekennzeichnet, dass der verwendete Schmierstoff aus einem Gemisch aus einem Wachs, einem Fett und einem Schmierfett besteht.

7. Zusammensetzung nach Anspruch 6, dadurch gekennzeichnet, dass der Schmierstoff 30 bis 60% Wachs, 10 bis 40% Fett und 10 bis 40% Schmierfett enthält, wobei sich diese Prozentangaben auf das Gesamtgewicht der besagten Schmierstoffkomponenten beziehen.

8. Zusammensetzung nach Anspruch 1, dadurch gekennzeichnet, dass sie aus etwa 80 Gew.-% Aethylenpolymer und etwa 20 Gew.-% normalerweise festem Schmierstoff besteht, wobei dieser Schmierstoff etwa 46 Gew.% Paraffinwachs, etwa 27 Gew.-% Stearin und etwa 27 Gew.-% Weissölschmierfett enthält.

9. Strukturelement mit Dimensionsstabilität und einem niedrigen Reibungskoeffizienten in Form eines zähen, starren, festen Körpers, dadurch gekennzeichnet, dass es aus einer Zusammensetzung nach einem der Ansprüche 1 bis 8 besteht.

10. Strukturelement nach Anspruch 9, dadurch gekennzeichnet, dass es die Form einer Art Achslager aufweist.

11. Verfahren zur Herstellung einer Zusammensetzung, die zu einem lasttragenden Strukturelement formbar ist, das unter der Einwirkung von Druckkräften dimensionsstabil ist, einen niedrigen Reibungskoeffizienten besitzt und dessen Oberfläche sich als weitgehend frei von ölartigem Film anfühlt, dadurch gekennzeichnet, dass man nacheinander:

(a) einen normalerweise festen, unter Wachsen, Fetten, Gemischen aus Wachsen und Fetten sowie Gemischen aus Wachsen und/oder Fetten mit Schmierfetten ausgewählten Schmierstoff, wobei dieser nicht mehr als 40 Gew.-% Schmierfette enthält, unter Bildung einer Flüssigkeit erhitzt,

(b) entweder ein feinverteiltes Aethylenpolymer extrem hohen Molekulargewichts oder ein feinverteiltes, spritzgiessbares Aethylenpolymer hoher Dichte und niedrigen bis mittleren Molekulargewichts auf eine Temperatur oberhalb der Temperatur des verflüssigten Schmierstoffs aber unterhalb des Erweichungspunkts des Polymeren erhitzt,

(c) den verflüssigten Schmierstoff und das Polymer unter Bildung eines homogenen Gemischs, das aus 5 bis 30 Gew.-% Schmierstoff und 70 bis 95 Gew.-% Polymer besteht, miteinander vermischt und

(d) dieses homogene Gemisch zu einem homogenen Pulver abkühlt.

# 0 108 172

12. Verfahren nach Anspruch 11, dadurch gekennzeichnet, dass man vor dem Vermischen von Schmierstoff und Polymer den normalerweise festen Schmierstoff auf eine Temperatur von etwa 70°C (160°F) und das Polymer auf eine Temperatur von 75 bis 95°C (170 bis 200°F) erhitzt.

13. Verfahren nach Anspruch 11 oder 12, dadurch gekennzeichnet, dass der Schmierstoff und das Polymer in Anteilen eingesetzt werden, die ein aus etwa 20 Gew.-% Schmierstoff und etwa 80 Gew.-% Polymer bestehendes Gemisch ergeben.

14. Verfahren nach Anspruch 13, dadurch gekennzeichnet, dass der Schmierstoff aus einem Gemisch aus Paraffinwachs, Stearin und Weissölschmierfett besteht, wobei das Wachs ungefähr 46 Gew.-% dieses Schmierstoffgemischs darstellt und der Rest des Gemischs aus ungefähr gleichen Gewichtsteilen Stearin und Weissölschmierfett besteht.

15. Verfahren zur Herstellung eines zähen, starren, dimensionsstabilen Gegenstands mit einem niedrigen Reibungskoeffizienten und einer von ölartigem Film weitgehend freien Oberfläche, dadurch gekennzeichnet, dass man gemäss einem Verfahren nach einem der Ansprüche 11 bis 14 unter Verwendung eines Polymeren extrem hohen Molekulargewichts, aber gegebenenfalls unter Weglassung der Stufe (d), ein Gemisch bildet und dass man das Gemisch auf eine Temperatur von 190 bis 220°C (380 bis 420°F) erhitzt und einem Druck von 70 bis 105 kg/cm$^2$ (1000 bis 1500 psi) genügend lange aussetzt, um beim Abkühlen den erforderlichen, dimensionsstabilen Artikel zu erzeugen.

16. Verfahren zur Herstellung eines dimensionsstabilen Artikels mit niedrigem Reibungskoeffizienten und einer weitgehend von ölartigem Film freien Oberfläche, dadurch gekennzeichnet, dass man gemäss einem Verfahren nach einem der Ansprüche 11 bis 14 unter Verwendung eines spritzgiessbaren Aethylenpolymeren, aber gegebenenfalls unter Weglassung der Stufe (d), ein Gemisch bildet, dieses in Granulat umformt und dann aus dem Granulat durch Spritzguss den erforderlichen dimensionsstabilen Artikel bildet.

**Revendications**

1. Une composition qui convient au moulage en un organe structural porteur de charge qui est dimensionnellement stable lorsqu'il est soumis à une force de compression, qui a un coefficient de friction bas, et dont la surface, au toucher, est sensiblement dépourvue d'un film de type huileux, comprenant un mélange d'un polymère d'éthylène et d'un lubrifiant, caractérisée en ce que la composition est un mélange sensiblement homogène de 70% à 95%, en poids, d'un polymère d'éthylène de poids moléculaire extrêmement élevé ou d'un polymère d'éthylène de haute densité moulable par injection, de poids moléculaire bas à moyen, et de 5% à 30%, en poids, d'un lubrifiant normalement solide choisi parmi les cires, les corps gras, les mélanges de cires et de corps gras et les mélanges de cires et/ou de corps gras avec des graisses, lesdites graisses ne comprenant pas plus de 40%, en poids, du lubrifiant.

2. Une composition selon la revendication 1, caractérisée en ce que l'on emploie un polymère d'éthylène de poids moléculaire extrêmement élevé qui a un poids moléculaire moyen compris entre $1,5 \cdot 10^6$ et $3,5 \cdot 10^6$.

3. Une composition selon la revendication 1, caractérisée en ce que l'on emploie un polymère d'éthylène de poids moléculaire bas à moyen, qui a un poids moléculaire moyen compris entre 60,000 et 750,000.

4. Une composition selon l'une quelconque des revendications 1 à 3, caractérisée en ce que le lubrifiant comprend une cire paraffinique.

5. Une composition selon l'une quelconque des revendications 1 à 4, caractérisée en ce que le lubrifiant comprend de la stéarine.

6. Une composition selon l'une quelconque des revendications 1 à 5, caractérisée en ce que l'on emploie un lubrifiant qui comprend un mélange d'une cire, d'un corps gras et d'une graisse.

7. Une composition selon la revendication 6, caractérisée en ce que le lubrifiant comprend de 30 à 60% de cire, de 10 à 40% de corps gras et de 10 à 40% de graisse, lesdits pourcentages étant basés sur le poids total des composants dudit lubrifiant.

8. Une composition selon la revendication 1, caractérisée en ce qu'elle comprend environ 80% en poids de polymère d'éthylène et environ 20% en poids de lubrifiant normalement solide, ledit lubrifiant comprenant environ 46% en poids de cire paraffinique, environ 27% en poids de stéarine et environ 27% en poids de graisse d'huile blanche.

9. Un organe structural ayant une stabilité dimensionnelle et un coefficient de friction bas sous la forme d'un corps solide, rigide et dur, caractérisé en ce qu'il est composé d'une composition selon l'une quelconque des revendications 1 à 8.

10. Un organe structural selon la revendication 9, caractérisé en ce qu'il est sous la forme d'un palier lisse.

11. Un procédé de préparation d'une composition qui convient au moulage en un organe structural porteur de charge qui est stable dimensionnellement lorsqu'il est soumis à une force de compression, qui a un coefficient de friction bas, et dont la surface, au toucher, est sensiblement dépourvue d'un film de type huileux, caractérisé en ce qu'il comprend les étapes suivantes:

(a) chauffer un lubrifiant normalement solide, sélectionné parmi les cires, les corps gras, les mélanges

# 0 108 172

de cires et de corps gras et les mélanges de cires et/ou de corps gras avec des graisses, le lubrifiant ne comprenant pas plus de 40% en poids de graisses, pour former un liquide,

(b) chauffer soit un polymère d'éthylène de poids moléculaire extrêment élevé, finement divisé, soit un polymère d'éthylène de haute densité moulable par injection, de poids moléculaire bas à moyen, finement divisé, à une température supérieure à la température du lubrifiant liquéfié mais inférieure à la température à laquelle le polymère se ramollit,

(c) mélanger le lubrifiant liquéfié et le polymère ensemble pour former un mélange homogène comprenant de 5% à 30% en poids de lubrifiant et de 70% à 95% en poids de polymère et

(d) refroidir ledit mélange homogène pour obtenir une poudre homogène.

12. Un procédé selon la revendication 11, caractérisé en ce que le lubrifiant normalement solide est chauffé à une température d'environ 70°C (160°F), et en ce que le polymère est chauffé à une température de 75 à 95°C (170 à 200°F) avant de mélanger le lubrifiant et le polymère.

13. Un procédé selon la revendication 11 ou la revendication 12, caractérisé en ce que l'on emploie le lubrifiant et le polymère dans des proportions fournissant un mélange comprenant environ 20% en poids de lubrifiant et environ 80% en poids de polymère.

14. Un procédé selon la revendication 13, caractérisé en ce que le lubrifiant comprend un mélange de cire paraffinique, de stéarine et d'une graisse d'huile blanche, ladite cire constituant environ 46% en poids dudit mélange lubrifiant, le reste du mélange comprenant des parties approximativement égales en poids de stéarine et de graisse d'huile blanche.

15. Un procédé de fabrication d'un article dimensionnellement stable, rigide et dur, ayant un coefficient de friction bas et une surface sensiblement dépourvue d'un film de type huileux, caractérisé en ce que l'on prépare un mélange par un procédé selon l'une quelconque des revendications 11 à 14 en utilisant un polymère de poids moléculaire extrêment élevé, mais le cas échéant, en omettant l'étape (d), et en ce que l'on chauffe le mélange à une température comprise entre 190 et 220°C (380 et 420°F) et en ce qu'on le soumet à une pression comprise entre 70 et 105 kg/cm² (1000 et 1500 psi) pendant un temps suffisant pour produire l'article dimensionnellement stable requis lors du refroidissement.

16. Un procédé de fabrication d'un article dimensionnellement stable, ayant un coefficient de friction bas, et une surface sensiblement dépourvue d'un film de type huileux, caractérisé en ce que l'on prépare un mélange par un procédé selon l'une quelconque des revendications 11 à 14 en utilisant un polymère d'éthylène moulable par injection mais, le cas échéant, en omettant l'étape (d), en ce que l'on façonne le mélange en granulés et en ce que les granulés sont subséquemment moulés par injection pour former l'article dimensionnellement stable requis.

14